# EUROPEAN PATENT APPLICATION

(11) **EP 4 844 829 A1**
(43) Date of publication of application: **25.11.2026**
(21) Application number: 25858321.0
(22) Date of filing: 31.03.2025
(51) Int. Cl.: H01M 4/36, H01M 4/58, H01M 10/0562

(54) **POSITIVE ELECTRODE SHEET, SOLID-STATE BATTERY CELL, BATTERY DEVICE, ELECTRIC DEVICE, AND POSITIVE ELECTRODE ACTIVE MATERIAL AND PREPARATION METHOD THEREFOR**

(30) Priority: 30.08.2024 CN 202411215789
(71) Applicant: Contemporary Amperex Technology Co., Limited, Ningde, Fujian 352100 (CN)
(72) Inventor: WU, Kai, Ningde, Fujian 352100 (CN); SHAO, Qinong, Ningde, Fujian 352100 (CN); ZHANG, Hongtu, Ningde, Fujian 352100 (CN); HUANG, Jinfeng, Ningde, Fujian 352100 (CN); NING, Ziyang, Ningde, Fujian 352100 (CN); HU, Bobing, Ningde, Fujian 352100 (CN)
(74) Representative: Jacob, Reuben Ellis
(86) International application number: PCT/CN2025/086345
(87) International publication number: WO 2026/045270

(57) **Abstract**

Provided in the present disclosure are a positive electrode sheet, a solid-state battery cell, a battery device, an electric device, and a positive electrode active material and a preparation method therefor. The positive electrode sheet comprises a positive electrode active material and a sulfide solid-state electrolyte material, wherein the positive electrode active material comprises a substrate material, a cobalt-rich material located on the surface of the substrate material and a coating material located on at least part of the surface of the cobalt-rich material; the substrate material comprises a transition metal oxide, the cobalt-rich material comprises a Co-containing transition metal oxide, and the molar content of Co in the cobalt-rich material is greater than that of Co in the substrate material; and the coating material comprises an electrolyte salt material. When applied to a solid-state battery cell, the positive electrode sheet can reduce the capacity fade rate of the solid-state battery cell at high temperatures and improve the high-temperature cycle performance of the solid-state battery cell.

## Description

### CROSS-REFERENCE TO RELATED APPLICATIONS

The present application claims priority to Chinese Patent Application No. 202411215789.2, filed on August 30, 2024 and entitled "POSITIVE ELECTRODE SHEET, SOLID-STATE BATTERY CELL, BATTERY APPARATUS, POWER CONSUMING APPARATUS, AND POSITIVE ELECTRODE ACTIVE MATERIAL AND PREPARATION METHOD THEREFOR", which is incorporated herein by reference in its entirety.

### TECHNICAL FIELD

The present disclosure relates to a positive electrode sheet, a solid-state battery cell, a battery apparatus, a power consuming apparatus, and a positive electrode active material and a preparation method therefor.

### BACKGROUND

Compared with a liquid-state battery cell, a solid-state battery cell does not easily undergo burning and explosion due to use of a solid-state electrolyte material. Therefore, the solid-state battery cell has higher reliability. However, the solid-state battery cell has a problem of rapid capacity fade at high temperatures.

### SUMMARY

The present disclosure provides a positive electrode sheet, a solid-state battery cell, a battery apparatus, a power consuming apparatus, and a positive electrode active material and a preparation method therefor. When applied to a solid-state battery cell, the positive electrode sheet can reduce the capacity fade rate of the solid-state battery cell at high temperatures and improve the high-temperature cycle performance of the solid-state battery cell.

According to a first aspect, the present disclosure provides a positive electrode sheet, including a positive electrode active material and a sulfide solid-state electrolyte material. The positive electrode active material includes a substrate material, a cobalt-rich material located on a surface of the substrate material, and a coating material located on at least a part of a surface of the cobalt-rich material. The substrate material includes a transition metal oxide. The cobalt-rich material includes a Co-containing transition metal oxide. A molar content of Co in the cobalt-rich material is greater than a molar content of Co in the substrate material. The coating material includes an electrolyte salt material.

The positive electrode active material of the present disclosure includes the cobalt-rich material located on the surface of the substrate material and the coating material located on at least part of the surface of the cobalt-rich material. The substrate material includes the transition metal oxide. The cobalt-rich material includes the Co-containing transition metal oxide. Therefore, the cobalt-rich material and the substrate material can have good affinity and structural compatibility, thereby improving the overall structural stability of the positive electrode active material. In addition, the molar content of Co in the cobalt-rich material is greater than the molar content of Co in the substrate material. Therefore, the cobalt-rich material located on the surface of the substrate material can further slow down the decomposition of the sulfide solid-state electrolyte material by the substrate material, thereby improving the stability of the interface between the positive electrode active material and the sulfide solid-state electrolyte material. The coating material includes the electrolyte salt material, and a modulus of elasticity of the electrolyte salt material is much smaller than that of the substrate material. Therefore, a larger coating area can be implemented, thereby further reducing side reactions between the substrate material and the sulfide solid-state electrolyte material. Therefore, the positive electrode active material and the sulfide solid-state electrolyte material of the positive electrode sheet of the present disclosure have good high-temperature stability therebetween. When applied to a solid-state battery cell, the positive electrode sheet can reduce the capacity fade rate of the solid-state battery cell at high temperatures and improve the high-temperature cycle performance of the solid-state battery cell.

In some examples, the coating material includes a fluorine-containing electrolyte salt material. The fluorine-containing electrolyte salt material has good high-temperature stability and high-voltage stability and can decompose to form LiF before the sulfide solid-state electrolyte material during charging, thereby reducing the decomposition of the sulfide solid-state electrolyte material, improving the high-temperature stability of the positive electrode active material and the sulfide solid-state electrolyte material, reducing the capacity fade rate of the solid-state battery cell at high temperatures, and improving the high-temperature cycle performance of the solid-state battery cell.

In some examples, the coating material includes one or more of Li₂PO₂F₂, lithium difluoro(oxalato)borate, lithium difluoro bis(oxalato)phosphate, and lithium tetrafluoro(oxalato)phosphate. Within the foregoing range, the coating material can decompose to form LiF before the sulfide solid-state electrolyte material to coat the surface of the cobalt-rich material, which can reduce the decomposition of the sulfide solid-state electrolyte material, improve the high-temperature stability of the positive electrode active material and the sulfide solid-state electrolyte material, and enable the positive electrode active material to have high ion conductivity, thereby further improving the high-temperature cycle performance of the solid-state battery cell. In addition, the coating material has a low modulus of elasticity, so that a larger coating area can be implemented, thereby further reducing side reactions between the substrate material and the sulfide solid-state electrolyte material.

In some examples, based on a total mass of the positive electrode active material as 100%, a mass fraction of the coating material is 0.1% to 3%. When the mass fraction of the coating material is within the foregoing range, the positive electrode active material can have high ion conductivity and high specific capacity.

In some examples, the coating material is located on 90% to 100% of the surface of the cobalt-rich material. In this way, the side reactions between the substrate material and the sulfide solid-state electrolyte material can be further reduced, the capacity fade rate of the solid-state battery cell at high temperatures can be reduced, and the high-temperature cycle performance of the solid-state battery cell can be improved.

In some examples, a thickness of the cobalt-rich material is in a range of 0.5 nm to 50 nm. When the thickness of the cobalt-rich material is within the foregoing range, the high-temperature stability of the positive electrode active material and the sulfide solid-state electrolyte material can be improved, and the positive electrode active material can have high specific capacity.

In some examples, the substrate material includes one or more of a lithium nickel cobalt manganese oxide, a lithium nickel cobalt aluminum oxide, and a lithium-rich manganese-based material.

In some examples, the cobalt-rich material includes one or more of a cobalt-rich lithium nickel cobalt manganese oxide, a cobalt-rich lithium nickel cobalt aluminum oxide, and a cobalt-rich lithium-rich manganese-based material.

In some examples, the substrate material includes a Ni-containing transition metal oxide. The cobalt-rich material includes a transition metal oxide containing Ni and Co. A molar content of Ni in the cobalt-rich material is less than a molar content of Ni in the substrate material. Therefore, the solid-state battery cell can have both high energy density and good high-temperature cycle performance.

In some examples, the cobalt-rich material is located on 100% of the surface of the substrate material.

In some examples, there is no interface between the cobalt-rich material and the substrate material. Since there is no interface between the cobalt-rich material and the substrate material, the cobalt-rich material and the substrate material can have better affinity and structural compatibility, thereby further improving the overall structural stability of the positive electrode active material.

In some examples, the positive electrode active material further includes metal particles located between the cobalt-rich material and the coating material, and the metal particles include one or more of elemental cobalt particles and cobalt oxide particles.

In some examples, an average particle size of the positive electrode active material is 3 µm to 10 µm.

In some examples, an average particle size of the sulfide solid-state electrolyte material is 1 nm to 20 µm.

In some examples, a mass ratio of the positive electrode active material to the sulfide solid-state electrolyte material is 99:1 to 70:30. When the mass ratio of the positive electrode active material to the sulfide solid-state electrolyte material is within the foregoing range, the solid-state battery cell can have high energy density, high ion transport performance, and good cycle performance.

In some examples, the positive electrode sheet further includes a positive electrode conductive agent and/or a positive electrode binder.

In some examples, the positive electrode sheet further includes a positive electrode current collector, and the positive electrode active material and the sulfide solid-state electrolyte material are located on at least one surface of the positive electrode current collector.

According to a second aspect, the present disclosure provides a solid-state battery cell, including a negative electrode sheet, a solid-state electrolyte membrane, and the positive electrode sheet according to the first aspect. The solid-state electrolyte membrane is located between the negative electrode sheet and the positive electrode sheet.

In some examples, the negative electrode sheet includes one or more of lithium, lithium alloy, natural graphite, artificial graphite, mesocarbon microbeads, soft carbon, hard carbon, a silicon-based material, a tin-based material, lithium titanate, and a metal oxide.

In some examples, the solid-state electrolyte membrane includes one or more of a sulfide solid-state electrolyte material, a halide solid-state electrolyte material, and an oxide solid-state electrolyte material.

According to a third aspect, the present disclosure provides a battery apparatus, including a plurality of the solid-state battery cells according to the second aspect.

According to a fourth aspect, the present disclosure provides a power consuming apparatus, including the solid-state battery cell according to the second aspect or the battery apparatus according to the third aspect.

According to a fifth aspect, the present disclosure provides a positive electrode active material. The positive electrode active material includes a substrate material, a cobalt-rich material located on a surface of the substrate material, and a coating material located on at least part of a surface of the cobalt-rich material. The substrate material includes a transition metal oxide. The cobalt-rich material includes a Co-containing transition metal oxide. A molar content of Co in the cobalt-rich material is greater than a molar content of Co in the substrate material. The coating material includes an electrolyte salt material.

According to a sixth aspect, the present disclosure provides a preparation method for a positive electrode active material, including the following steps: providing a substrate material, a cobalt source material, and a coating material, the substrate material including a transition metal oxide, and the coating material including an electrolyte salt material; mixing the substrate material and the cobalt source material, and performing a first heating treatment in an oxygen-containing atmosphere to obtain an intermediate material; and mixing the obtained intermediate material and the coating material, and performing a second heating treatment in an oxygen-containing atmosphere to obtain the positive electrode active material, the positive electrode active material including the substrate material, a cobalt-rich material located on a surface of the substrate material, and the coating material located on at least part of a surface of the cobalt-rich material, the substrate material including the transition metal oxide, the cobalt-rich material including a Co-containing transition metal oxide, a molar content of Co in the cobalt-rich material being greater than a molar content of Co in the substrate material, and the coating material including the electrolyte salt material.

In some examples, a temperature of the first heating treatment is 500°C to 800°C.

In some examples, a time of the first heating treatment is 0.5 h to 10 h.

In some examples, a temperature of the second heating treatment is 300°C to 400°C.

In some examples, a time of the second heating treatment is 0.5 h to 5 h.

In some examples, the cobalt source material includes one or two of cobalt hydroxide and cobalt oxide.

### BRIEF DESCRIPTION OF THE DRAWINGS

In order to describe the technical solutions of the examples of the present disclosure more clearly, the accompanying drawings required for use in the examples of the present disclosure will be introduced briefly below. It is apparent that the accompanying drawings described below are only some examples of the present disclosure. Those skilled in the art can also obtain other drawings according to the accompanying drawings without creative effort.
FIG. 1 is a schematic view of a solid-state battery cell according to some examples of the present disclosure;
FIG. 2 is a schematic view of a power consuming apparatus according to some examples of the present disclosure; and
FIG. 3 is a schematic structural view of a positive electrode active material according to some examples of the present disclosure.

The drawings may not be drawn to the actual scale.

### DETAILED DESCRIPTION

Embodiments of a positive electrode sheet, a solid-state battery cell, a battery apparatus, a power consuming apparatus, and a positive electrode active material and a preparation method therefor of the present disclosure are specifically disclosed below in detail with appropriate reference to the accompanying drawings. However, there may be situations where unnecessary detailed explanations are omitted. For example, there may be situations where detailed descriptions of well-known matters and repeated descriptions of actually the same structure are omitted, for the purpose of preventing the following descriptions from becoming unnecessarily lengthy and helping to understand by those skilled in the art. In addition, the accompanying drawings and subsequent descriptions are provided for those skilled in the art to fully understand the present disclosure and are not intended to limit the subject matters recited in the claims.

Any "range" disclosed in the present disclosure is defined by a lower limit and an upper limit. A given range is defined by selecting a lower limit and an upper limit. The selected lower limit and upper limit define boundaries of a particular range. The range defined in this way may include or exclude end values, and may be arbitrarily combined, that is, any lower limit may be combined with any upper limit to form a new range. For example, if ranges 60 to 120 and 80 to 110 are listed for a specific parameter, it is to be understood that the ranges of 60 to 110 and 80 to 120 are also contemplated. In addition, if the minimum range values 1 and 2 and the maximum range values 3, 4 and 5 are listed, the following ranges are all contemplated: 1 to 3, 1 to 4, 1 to 5, 2 to 3, 2 to 4, and 2 to 5. In the present disclosure, unless otherwise specified, a numerical range "a to b" represents an abbreviated representation of any combination of real numbers between a to b, where both a and b are real numbers. For example, the numerical range "0 to 5" represents that all real numbers between "0 and 5" are listed herein, and "0 to 5" is merely an abbreviated representation of the combination of these numbers. In addition, when a parameter is expressed as an integer ≥2, it is equivalent to disclosing that the parameter is, for example, an integer such as 2, 3, 4, 5, 6, 7, 8, 9, 10, 11, 12, or the like.

Unless otherwise specified, all the embodiments and optional embodiments of the present disclosure may be combined with each other to form new technical solutions, and such technical solutions should be considered to be included in the disclosed content of the present disclosure.

Unless otherwise specified, all the technical features and optional technical features of the present disclosure may be combined with each other to form new technical solutions, and such technical solutions should be considered to be included in the disclosed content of the present disclosure.

Unless otherwise specified, all steps of the present disclosure may be performed sequentially or in a random order, and preferably sequentially. For example, "the method including steps (a) and (b)" represents that the method may include steps (a) and (b) performed sequentially, or may include steps (b) and (a) performed sequentially. For example, "the method may further include step (c)" represents that step (c) may be added to the method in any order. For example, the method may include steps (a), (b) and (c), or steps (a), (c) and (b), or steps (c), (a) and (b), or the like.

Unless otherwise specified, in the present disclosure, the terms "first", "second", and the like are used to distinguish different objects, rather than to describe a specific order or primary-secondary relationship.

In the present disclosure, the term "multiple" or "a plurality of" indicates two or more.

In the descriptions of the examples of the present disclosure, unless otherwise specified, a first feature being "above" or "below" a second feature may mean that the first feature directly contacts with the second feature, or the first feature indirectly contacts with the second feature through an intermediate medium. In addition, a first feature being "over", "above", and "upward" a second feature may mean that the first feature is directly above or obliquely above the second feature, or merely indicate that a horizontal height of the first feature is higher than that of the second feature. A first feature being "under", "below", and "beneath" the second feature may mean that the first feature is directly below or obliquely below the second feature, or may merely indicate that a horizontal height of the first feature is lower than that of the second feature.

A test temperature for each parameter mentioned in the present disclosure is 25°C, unless otherwise specified.

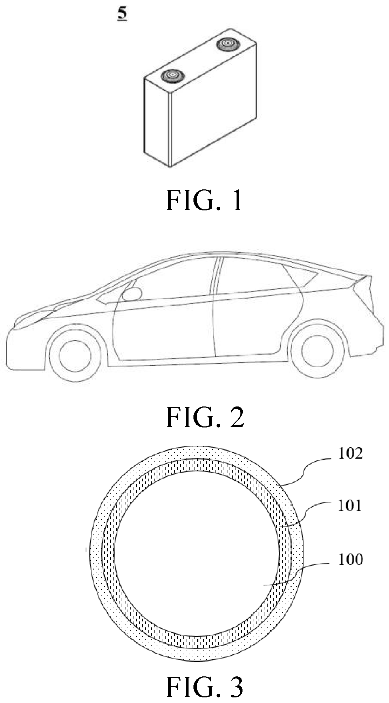

The solid-state battery cell mentioned in the examples of the present disclosure can independently implement functions of charging and discharging. After being discharged, the solid-state battery cell may activate, by means of charging, an active material to continue to be used. The solid-state battery cell may be in a shape of a cylinder, a cuboid, or other shapes, which are not limited in the examples of the present disclosure. FIG. 1 shows a solid-state battery cell 5 with a cuboid structure as an example.

The battery apparatus mentioned in the examples of the present disclosure may include one or more battery cell assemblies, configured to provide a voltage and a capacity. The battery cell assembly may include a plurality of solid-state battery cells. The plurality of solid-state battery cells are connected in series, in parallel, or in series-parallel through a bus component.

In some examples, the battery cell assembly is usually formed by arranging a plurality of solid-state battery cells.

As an example, the battery cell assembly may be a battery module. The battery module is an independent module that is formed by arranging and fixing a plurality of solid-state battery cells. As an example, the battery module may be formed by bundling a plurality of solid-state battery cells through a strap.

In some examples, the battery apparatus may be a battery pack, and the battery pack includes a box and one or more battery cell assemblies accommodated in the box.

As an example, the battery cell assembly may be a battery module. The battery cell assembly may be accommodated in the box by fixing the battery module in the box.

As an example, the battery cell assembly may alternatively be accommodated in the box by directly fixing the plurality of solid-state battery cells in the box.

For example, the box may include a first box body and a second box body. The first box body and the second box body are snapped to define a sealed space inside the box to accommodate the battery cell assembly. The term "sealed" means "covered" or "closed", or may be hermetic, or may be non-hermetic. The first box body may be a top cover or a bottom plate.

As an example, the box may include a top cover, a frame, and a bottom plate. The top cover and the bottom plate are connected to the frame separately to form a sealed space inside the box to accommodate the battery cell assembly.

In some examples, the box may serve as a part of a chassis structure of a vehicle. For example, a part of the box may become at least a part of a floor of the vehicle, or a part of the box may become at least a part of a cross member and a longitudinal member of the vehicle.

The technical solutions described in the examples of the present disclosure are applicable to various power consuming apparatuses that use solid-state battery cells and battery apparatuses, which may be, but is not limited to, a mobile device (for example, a mobile phone, a tablet computer, or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like. The solid-state battery cell and the battery apparatus are used to store or provide electric energy.

FIG. 2 is a schematic view of a power consuming apparatus as an example. The power consuming apparatus is an all-electric vehicle, a hybrid electric vehicle, a plug-in hybrid electric vehicle, or the like.

The solid-state battery cell provided in this example of the present disclosure includes an electrode assembly and an outer package, and the outer package may be used for encapsulating the electrode assembly. The outer package may be a hard shell, for example, a hard plastic shell, an aluminum shell, or a steel shell. The outer package may also be a soft package, for example, a pouch type soft package. A material of the soft package may be plastic, such as one or more of an aluminum-plastic film, polypropylene, polybutylene terephthalate (PBT), and polybutylene succinate (PBS).

The positive electrode of the solid-state battery cell typically uses a high-potential transition metal oxide positive electrode active material. Because of the difference of electrochemical potential between the transition metal oxide positive electrode active material and a sulfide solid-state electrolyte material, side reactions inevitably occur at the interface, and the generated interface by-products increase the resistance of the solid-state battery cell and hinder ion transport. In addition, oxygen released by the transition metal oxide positive electrode active material during charging may oxidize the sulfide solid-state electrolyte material, thereby further causing more serious side reactions at the interface.

Currently, oxides such as Li₂NbO₃ and Li₂ZrO₃ are commonly used to coat the transition metal oxide positive electrode active material, to reduce side reactions at the interface between the transition metal oxide positive electrode active material and the sulfide solid-state electrolyte material, which can enable the solid-state battery cell to have good cycle performance at room temperatures. However, when the solid-state battery cell is charged and discharged at a high temperature (for example, >50°C), side reactions at the interface between the transition metal oxide positive electrode active material and the sulfide solid-state electrolyte material become more serious. The conventional oxide coating material cannot effectively reduce the capacity fade of the solid-state battery cell at high temperatures.

Based on this, the present disclosure provides a positive electrode active material and a positive electrode sheet including the positive electrode active material. When applied to a solid-state battery cell, the positive electrode sheet can reduce the capacity fade rate of the solid-state battery cell at high temperatures and improve the high-temperature cycle performance of the solid-state battery cell.

The positive electrode sheet in the present disclosure includes a positive electrode active material and a sulfide solid-state electrolyte material.

As shown in FIG. 3, the positive electrode active material of the present disclosure includes a substrate material 100, a cobalt-rich material 101 located on a surface of the substrate material 100, and a coating material 102 located on at least part of a surface of the cobalt-rich material 101. The substrate material 100 includes a transition metal oxide. The cobalt-rich material 101 includes a Co-containing transition metal oxide. A molar content of Co in the cobalt-rich material is greater than a molar content of Co in the substrate material. The coating material 102 includes an electrolyte salt material.

The positive electrode active material of the present disclosure includes the cobalt-rich material located on the surface of the substrate material and the coating material located on at least part of the surface of the cobalt-rich material. The substrate material includes the transition metal oxide. The cobalt-rich material includes the Co-containing transition metal oxide. Therefore, the cobalt-rich material and the substrate material can have good affinity and structural compatibility, thereby improving the overall structural stability of the positive electrode active material. In addition, the molar content of Co in the cobalt-rich material is greater than the molar content of Co in the substrate material. Therefore, the cobalt-rich material located on the surface of the substrate material can further slow down the decomposition of the sulfide solid-state electrolyte material by the substrate material, thereby improving the stability of the interface between the positive electrode active material and the sulfide solid-state electrolyte material.

The coating material includes the electrolyte salt material, and a modulus of elasticity of the electrolyte salt material is much smaller than that of the substrate material. Therefore, a larger coating area can be implemented, thereby further reducing side reactions between the substrate material and the sulfide solid-state electrolyte material.

Therefore, the positive electrode active material and the sulfide solid-state electrolyte material of the positive electrode sheet of the present disclosure have good high-temperature stability therebetween. When applied to a solid-state battery cell, the positive electrode sheet can reduce the capacity fade rate of the solid-state battery cell at high temperatures and improve the high-temperature cycle performance of the solid-state battery cell.

In some examples, the substrate material may include one or more of a lithium nickel cobalt manganese oxide, a lithium nickel cobalt aluminum oxide, and a lithium-rich manganese-based material.

In some examples, the cobalt-rich material may include one or more of a cobalt-rich lithium nickel cobalt manganese oxide, a cobalt-rich lithium nickel cobalt aluminum oxide, and a cobalt-rich lithium-rich manganese-based material.

In some examples, the substrate material may include a lithium nickel cobalt manganese oxide, and the cobalt-rich material may include a cobalt-rich lithium nickel cobalt manganese oxide.

In some examples, the substrate material may include a lithium nickel cobalt aluminum oxide, and the cobalt-rich material may include a cobalt-rich lithium nickel cobalt aluminum oxide.

In some examples, the substrate material may include a lithium-rich manganese-based material, and the cobalt-rich material may include a cobalt-rich lithium-rich manganese-based material.

In some examples, the cobalt-rich material may be located on 100% of the surface of the substrate material.

In some examples, there is no interface between the cobalt-rich material and the substrate material. Since there is no interface between the cobalt-rich material and the substrate material, the cobalt-rich material and the substrate material can have better affinity and structural compatibility, thereby further improving the overall structural stability of the positive electrode active material.

In some examples, the substrate material may include a Ni-containing transition metal oxide. The cobalt-rich material may include a transition metal oxide containing Ni and Co. A molar content of Ni in the cobalt-rich material may be less than a molar content of Ni in the substrate material.

The substrate material includes the Ni-containing transition metal oxide, and the molar content of Ni in the substrate material is greater than the molar content of Ni in the cobalt-rich material. Therefore, the positive electrode active material can have high specific capacity. Usually, side reactions between a transition metal oxide having a high Ni content and a sulfide solid-state electrolyte material are relatively serious, which affects the capacity fade of the solid-state battery cell at high temperatures. In the present disclosure, the cobalt-rich material and the coating material are disposed on the surface of the substrate material. The cobalt-rich material can slow down the decomposition of the sulfide solid-state electrolyte material by the substrate material and improve the stability of the interface between the positive electrode active material and the sulfide solid-state electrolyte material. The coating material includes the electrolyte salt material, and a modulus of elasticity of the electrolyte salt material is much smaller than that of the substrate material. Therefore, a larger coating area can be implemented, thereby further reducing side reactions between the substrate material and the sulfide solid-state electrolyte material and then enabling the solid-state battery cell to have both high energy density and good high-temperature cycle performance.

In some examples, the substrate material may include a material having a general formula LiₐNi_{b}Co_{c}M_{d}OₑA_{f}, where 0.8≤a≤1.2, 0<b<1, 0<c<1, 0<d<1, 1≤e≤2, 0≤f≤1, M may include one or more of Mn, Al, Zr, Zn, Cu, Cr, Mg, Fe, V, Ti, and B, and A may include one or more of N, F, S, and Cl.

Optionally, 0.3≤b<1, 0.5≤b<1, 0.6≤b<1, 0.8≤b<1, and 0.83≤b<1.

The substrate material has a high Ni content, so that the positive electrode active material has high specific capacity, and the solid-state battery cell has both high energy density and good high-temperature cycle performance.

As an example, the substrate material may include, but is not limited to, one or more of LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), LiNi_{0.8}Co_{0.1}Mn_{0.1}O₂ (NCM811 for short), LiNi_{0.83}Mn_{0.08}Co_{0.07}O₂ (Ni83 for short), LiNi_{0.90}Mn_{0.05}Co_{0.05}O₂ (Ni90 for short), LiNi_{0.94}Mn_{0.03}Co_{0.03}O₂ (Ni94 for short), LiNi_{0.96}Co_{0.02}Mn_{0.02}O₂ (Ni96 for short), and LiNi_{0.85}Co_{0.1}Al_{0.05}O_{2.}

Optionally, the substrate material may include, but is not limited to, one or more of LiNi_{0.8}Co_{0.1}Mn_{0.1}O₂ (NCM811 for short), LiNi_{0.83}Mn_{0.08}Co_{0.07}O₂ (Ni83 for short), LiNi_{0.90}Mn_{0.05}Co_{0.05}O₂ (Ni90 for short), LiNi_{0.94}Mn_{0.03}Co_{0.03}O₂ (Ni94 for short), LiNi_{0.96}Co_{0.02}Mn_{0.02}O₂ (Ni96 for short), and LiNi_{0.85}Co_{0.1}Al_{0.05}O₂.

In a charging and discharging process of a solid-state battery cell, Li is deintercalated and consumed, and a molar content of Li varies when the solid-state battery cell is discharged to different states. In the list of substrate materials in the present disclosure, the molar content of Li is an initial state of the material, that is, the state before feeding. When the substrate material is applied to a solid-state battery cell, the molar content of Li will change after charge-discharge cycling. In the list of substrate materials in the present disclosure, the molar content of O is only a theoretical state value, and the molar content of O will change due to the release of oxygen from the crystal lattice, so that the actual molar content of O will fluctuate.

In some examples, the cobalt-rich material may include a material having a general formula Liₐ₁Ni_{b1}Co_{c1}M¹_{d1}Oₑ₁A¹_{f1}, where 0.8≤a1≤1.2, 0<b1<1, 0<c1<1, 0<d1<1, 1≤e1≤2, 0≤f1≤1, M¹ may include one or more of Mn, Al, Zr, Zn, Cu, Cr, Mg, Fe, V, Ti, and B, and A¹ may include one or more of N, F, S, and Cl.

Optionally, c<c1.

Optionally, b>b1.

In some examples, a thickness of the cobalt-rich material may be in a range of 0.5 nm to 50 nm, for example, 0.5 nm, 1 nm, 2 nm, 3 nm, 4 nm, 5 nm, 6 nm, 8 nm, 10 nm, 12 nm, 14 nm, 16 nm, 18 nm, 20 nm, 22 nm, 24 nm, 26 nm, 28 nm, 30 nm, 32 nm, 34 nm, 36 nm, 38 nm, 40 nm, 42 nm, 44 nm, 46 nm, 48 nm, 50 nm, or a range formed by any of the foregoing values.

When the thickness of the cobalt-rich material is within the foregoing range, the high-temperature stability of the positive electrode active material and the sulfide solid-state electrolyte material can be improved, and the positive electrode active material can have high specific capacity.

The range of the thickness of the cobalt-rich material may be obtained by using EDS (Energy Dispersive Spectroscope) element analysis in combination with a TEM (Transmission Electron Microscope) or SEM (Scanning Electron Microscope) surface scan to obtain a cross-section image of a positive electrode active material particle and then obtaining the range of the thickness according to Co distribution in the cross-section image. During the test, the cross-section of the positive electrode active material particle may be prepared by using a cross-section polisher, and the cross-section passes through the core of the positive electrode active material particle.

In some examples, the coating material may include a fluorine-containing electrolyte salt material.

The fluorine-containing electrolyte salt material has good high-temperature stability and high-voltage stability and can decompose to form LiF before the sulfide solid-state electrolyte material during charging, thereby reducing the decomposition of the sulfide solid-state electrolyte material, improving the high-temperature stability of the positive electrode active material and the sulfide solid-state electrolyte material, reducing the capacity fade rate of the solid-state battery cell at high temperatures, and improving the high-temperature cycle performance of the solid-state battery cell.

In some examples, the coating material may include one or more of Li₂PO₂F₂, lithium difluoro(oxalato)borate (LiDFOB), lithium difluoro bis(oxalato)phosphate (LiDFBOP), and lithium tetrafluoro(oxalato)phosphate (LiOTFP).

Within the foregoing range, the coating material can decompose to form LiF before the sulfide solid-state electrolyte material to coat the surface of the cobalt-rich material, which can reduce the decomposition of the sulfide solid-state electrolyte material, improve the high-temperature stability of the positive electrode active material and the sulfide solid-state electrolyte material, and enable the positive electrode active material to have high ion conductivity, thereby further improving the high-temperature cycle performance of the solid-state battery cell. In addition, the coating material has a low modulus of elasticity, so that a larger coating area can be implemented, thereby further reducing side reactions between the substrate material and the sulfide solid-state electrolyte material.

In some examples, based on a total mass of the positive electrode active material as 100%, a mass fraction of the coating material may be 0.1% to 3%, for example, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, or a range formed by any of the foregoing values.

When the mass fraction of the coating material is within the foregoing range, the positive electrode active material can have high ion conductivity and high specific capacity.

In some examples, the coating material may be located on 90% to 100% of the surface of the cobalt-rich material. Optionally, the coating material may be located on 100% of the surface of the cobalt-rich material.

In this way, the side reactions between the substrate material and the sulfide solid-state electrolyte material can be further reduced, the capacity fade rate of the solid-state battery cell at high temperatures can be reduced, and the high-temperature cycle performance of the solid-state battery cell can be improved.

In some examples, the positive electrode active material may further include metal particles located between the cobalt-rich material and the coating material, and the metal particles may include one or more of elemental cobalt particles and cobalt oxide particles.

In some examples, an average particle size of the positive electrode active material may be 3 µm to 10 µm, for example, 3 µm, 4 µm, 5 µm, 6 µm, 7 µm, 8 µm, 9 µm, 10 µm, or a range formed by any of the foregoing values.

In some examples, the positive electrode active material may be single-crystalline or polycrystalline.

In some examples, the sulfide solid-state electrolyte material may include one or more of Li₆PS₅X, an LGPS-type sulfide solid-state electrolyte material, a multielement sulfide solid-state electrolyte material. X includes one or more of F, Cl, Br, and I.

Optionally, the LGPS-type sulfide solid-state electrolyte material may include Li_{10±δ5}Ge_{1-g}G_{g}P_{2-q}Q_{q}S_{12-w}W_{w}, where 0≤δ5<1, 0≤g≤1, 0≤q≤2, 0≤w<1, G includes one or both of Si and Sn, Q includes Sb, and W includes one or more of O, Se, Te, Cl, Br, I, and F.

Optionally, the multielement sulfide solid-state electrolyte material may include one or more of Li₂S-P₂S₅, Li₂S-SiS₂, Li₂S-GeS₂, and (100-u-v)Li₂S·uP₂S₅·vMₘNₙ, where 0<u<100, 0<v<100, 0<u+v<100, 0≤M<4, 0≤N<6, M includes one or more of Li, B, Ge, Si, Sn, and Sb, and N includes one or more of S, Se, Te, O, Cl, Br, I, and F.

In some examples, as an example, the sulfide solid-state electrolyte material may include one or more of Li₆PS₅Cl, Li₆PS₅Br, Li₁₀GeP₂S₁₂, Li₃PS₄, and Li₇P₃S₁₁.

In some examples, an average particle size of the sulfide solid-state electrolyte material may be 1 nm to 20 µm, for example, 1 nm, 10 nm, 20 nm, 50 nm, 100 nm, 200 nm, 300 nm, 400 nm, 500 nm, 600 nm, 700 nm, 800 nm, 900 nm, 1 µm, 2 µm, 3 µm, 4 µm, 5 µm, 6 µm, 8 µm, 10 µm, 12 µm, 14 µm, 16 µm, 18 µm, 20 µm, or a range formed by any of the foregoing values. Optionally, the average particle size of the sulfide solid-state electrolyte material may be 50 nm to 5 µm.

In some examples, a mass ratio of the positive electrode active material to the sulfide solid-state electrolyte material may be 99:1 to 70:30, for example, 99:1, 98:2, 97:3, 96:4, 95:5, 94:6, 93:7, 92:8, 91:9, 90:10, 89:11, 88:12, 87:13, 86:14, 85:15, 84:16, 83:17, 82:18, 81:19, 80:20, 79:21, 78:22, 77:23, 76:24, 75:25, 74:26, 73:27, 72:28, 71:29, 70:30, or a range formed by of any of the foregoing values.

When the mass ratio of the positive electrode active material to the sulfide solid-state electrolyte material is within the foregoing range, the solid-state battery cell can have high energy density, high ion transport performance, and good cycle performance.

Optionally, the mass ratio of the positive electrode active material to the sulfide solid-state electrolyte material may be 95:5 to 70:30, 90:10 to 70:30, 85:15 to 70:30, 95:5 to 72:28, 90:10 to 72:28, or 85:15 to 72:28.

In some examples, the positive electrode sheet may further include a positive electrode binder. The positive electrode binder may include, but is not limited to, one or more of polyvinylidene fluoride (PVDF), polytetrafluoroethylene (PTFE), a vinylidene fluoridetetrafluoroethylene-propylene terpolymer, a vinylidene fluoride-hexafluoropropylene-tetrafluoroethylene terpolymer, a tetrafluoroethylene-hexafluoropropylene copolymer, fluorinated acrylate resin, water-soluble unsaturated resin SR-1B, methyl vinyl silicone rubber, nitrile rubber (NBR), hydrogenated nitrile rubber (HNBR), styrene-butadiene rubber (SBR), thermoplastic styrene-butadiene rubber (SBS), isoprene rubber, butadiene rubber (BR), ethyl cellulose, polyacrylic acid (PAA), sodium polyacrylate (PAAS), polyacrylamide (PAM), polyvinyl alcohol (PVA), sodium alginate (SA), polymethylacrylic acid (PMAA), carboxymethyl chitosan (CMCS), fluororubber, and acrylate rubber.

In some examples, the positive electrode sheet may further include a positive electrode conductive agent. The positive electrode conductive agent may include, but is not limited to, one or more of conductive graphite (e.g., KS-6, or SFG-6), superconducting carbon, acetylene black, carbon black (e.g., SP), Ketjen black (e.g., ECP), carbon dots, carbon nanotubes, graphene, carbon nanofibers, and vapor-grown carbon fibers (VGCF).

The positive electrode sheet may include a positive electrode current collector, or may not include a positive electrode current collector.

In some examples, the positive electrode sheet may include a positive electrode current collector and a positive electrode film layer located on at least one surface of the positive electrode current collector, and the positive electrode film layer includes a positive electrode active material and a sulfide solid-state electrolyte material.

The positive electrode current collector has two opposite surfaces in a thickness direction thereof, and the positive electrode film layer is arranged on either or both of the two opposite surfaces of the positive electrode current collector.

In some examples, the positive electrode film layer may further include a positive electrode binder. The positive electrode binder may include, but is not limited to, one or more of polyvinylidene fluoride (PVDF), polytetrafluoroethylene (PTFE), a vinylidene fluoridetetrafluoroethylene-propylene terpolymer, a vinylidene fluoride-hexafluoropropylene-tetrafluoroethylene terpolymer, a tetrafluoroethylene-hexafluoropropylene copolymer, fluorinated acrylate resin, water-soluble unsaturated resin SR-1B, methyl vinyl silicone rubber, nitrile rubber (NBR), hydrogenated nitrile rubber (HNBR), styrene-butadiene rubber (SBR), thermoplastic styrene-butadiene rubber (SBS), isoprene rubber, butadiene rubber (BR), ethyl cellulose, polyacrylic acid (PAA), sodium polyacrylate (PAAS), polyacrylamide (PAM), polyvinyl alcohol (PVA), sodium alginate (SA), polymethylacrylic acid (PMAA), carboxymethyl chitosan (CMCS), fluororubber, and acrylate rubber.

In some examples, the positive electrode film layer may further include a positive electrode conductive agent. The positive electrode conductive agent may include, but is not limited to, one or more of conductive graphite (e.g., KS-6, or SFG-6), superconducting carbon, acetylene black, carbon black (e.g., SP), Ketjen black (e.g., ECP), carbon dots, carbon nanotubes, graphene, carbon nanofibers, and vapor-grown carbon fibers (VGCF).

In some examples, the positive electrode current collector may be a metal foil or a composite current collector. As an example of the metal foil, a stainless steel foil, a carboncoated aluminum foil, an aluminum foil, a nickel foil, or a titanium foil may be used. The composite current collector may include a polymer material substrate layer and a metal material layer formed on at least one surface of the polymer material substrate layer. As an example, the metal material may include, but is not limited to, one or more of aluminum, aluminum alloy, nickel, nickel alloy, titanium, titanium alloy, silver, and silver alloy. As an example, the polymer material substrate layer may include, but is not limited to, one or more of polypropylene, polyethylene terephthalate (PET), polybutylene terephthalate (PBT), polystyrene (PS), and polyethylene.

The positive electrode sheet may be prepared by using a dry process, or may be prepared by using a wet process.

The present disclosure further provides a preparation method for a positive electrode active material, which can be used for preparing the foregoing positive electrode active material.

The preparation method for a positive electrode active material includes the following steps: providing a substrate material, a cobalt source material, and a coating material, the substrate material including a transition metal oxide, and the coating material including an electrolyte salt material; mixing the substrate material and the cobalt source material, and performing first heating treatment in an oxygen-containing atmosphere to obtain an intermediate material; and mixing the obtained intermediate material and the coating material, and performing second heating treatment in an oxygen-containing atmosphere to obtain the positive electrode active material. The positive electrode active material includes the substrate material, a cobalt-rich material located on a surface of the substrate material, and the coating material located on at least a part of a surface of the cobalt-rich material. The substrate material includes the transition metal oxide. The cobalt-rich material includes a Co-containing transition metal oxide. A molar content of Co in the cobalt-rich material is greater than a molar content of Co in the substrate material. The coating material includes the electrolyte salt material.

The substrate material and the cobalt source material are mixed, and the first heating treatment is performed in the oxygen-containing atmosphere. By means of diffusion of Co on the surface of the substrate material, the cobalt-rich material may be formed in situ at the diffusion position. Thereby, there is no interface between the formed cobalt-rich material and the substrate material, and the cobalt-rich material and the substrate material have better affinity and structural compatibility, thereby improving the overall structural stability of the positive electrode active material. In addition, by means of diffusion of Co on the surface of the substrate material, the entire surface of the substrate material may be further coated in situ with the cobalt-rich material.

The coating material includes the electrolyte salt material, and a modulus of elasticity of the electrolyte salt material is much smaller than that of the substrate material. Therefore, a larger coating area can be implemented, thereby further reducing side reactions between the substrate material and the sulfide solid-state electrolyte material.

As a result, the positive electrode active material prepared by using the preparation method of the present disclosure has good high-temperature stability. Therefore, the positive electrode active material and the sulfide solid-state electrolyte material have good high-temperature stability therebetween. When applied to a solid-state battery cell, the positive electrode active material can reduce the capacity fade rate of the solid-state battery cell at high temperatures and improve the high-temperature cycle performance of the solid-state battery cell.

In some examples, a temperature of the first heating treatment may be 500°C to 800°C, for example, 500°C, 520°C, 540°C, 560°C, 580°C, 600°C, 620°C, 640°C, 660°C, 680°C, 700°C, 720°C, 740°C, 760°C, 780°C, 800°C, or a range formed by any of the foregoing values.

When the temperature of the first heating treatment is within the foregoing range, Co can be better diffused on the surface of the substrate material, and the entire surface of the substrate material can be coated in situ with the cobalt-rich material.

In some examples, a time of the first heating treatment may be 0.5 h to 10 h, for example, 0.5 h, 1 h, 2 h, 3 h, 4 h, 5 h, 6 h, 7 h, 8 h, 9 h, 10 h, or a range formed by any of the foregoing values.

When the time of the first heating treatment is within the foregoing range, Co can be better diffused on the surface of the substrate material, and the entire surface of the substrate material can be coated in situ with the cobalt-rich material.

In some examples, a temperature of the second heating treatment may be 300°C to 400°C, for example, 300°C, 310°C, 320°C, 330°C, 340°C, 350°C, 360°C, 370°C, 380°C, 390°C, 400°C, or a range formed by any of the foregoing values.

In some examples, a time of the second heating treatment may be 0.5 h to 5 h, for example. 0.5 h, 1 h, 2 h, 3 h, 4 h, 5 h, or a range formed by any of the foregoing values.

In some examples, a volume fraction of oxygen in the oxygen-containing atmosphere may be 50% to 100%. For example, the oxygen-containing atmosphere may be oxygen or a mixture of oxygen and an inert gas. The inert gas may include, but is not limited to, one or more of nitrogen, argon, and helium.

In some examples, the cobalt source material may include one or two of cobalt hydroxide and cobalt oxide.

In some examples, based on a total mass of the substrate material and the cobalt source material as 100%, a mass fraction of the cobalt source material may be 0.1% to 3%, for example, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, or a range formed by any of the foregoing values.

By adjusting the amount of the cobalt source material, the range of the thickness of the cobalt-rich material can be adjusted, and the elemental cobalt particles and/or the cobalt oxide particles can be formed on the surface of the Co-containing transition metal oxide.

In some examples, the substrate material and the cobalt source material may be mixed by dry mixing or wet mixing.

In some examples, the intermediate material and the coating material may be mixed by dry mixing or wet mixing.

The present disclosure further provides a solid-state battery cell, including a negative electrode sheet, a solid-state electrolyte membrane, and the positive electrode sheet provided in the present disclosure. The solid-state electrolyte membrane is located between the negative electrode sheet and the positive electrode sheet.

### [Negative electrode sheet]

The negative electrode sheet may be prepared by using a dry process, or may be prepared by using a wet process.

In some examples, the negative electrode sheet may include one or more of lithium, lithium alloy, natural graphite, artificial graphite, mesocarbon microbeads, soft carbon, hard carbon, a silicon-based material, a tin-based material, lithium titanate, and a metal oxide.

Optionally, a mass fraction of lithium in the lithium alloy may be 90% or more.

Optionally, another element in the lithium alloy may include, but is not limited to, one or more of In, Mg, AI, Zn, Sn, Ag, Au, Ga, Pt, and Fe.

Optionally, the lithium alloy may include, but is not limited to, an InLi alloy, a Li-Mg alloy, a Li-Al alloy, a Li-Zn alloy, a Li-Fe alloy, and the like.

Optionally, the silicon-based material may include, but is not limited to, one or more of elemental silicon, silicon oxide, a silicon-carbon composite, a silicon-nitrogen composite, and a silicon alloy material.

Optionally, the tin-based material may include, but is not limited to, one or more of elemental tin, tin oxide, and a tin alloy material.

Optionally, the metal oxide may include, but is not limited to one or more of TiO₂, MoO₂, In₂O₃, Al₂O₃, Cu₂O, VO₂, Ga₂O₃, Sb₂O₅, and Bi₂O₅.

In some examples, the negative electrode sheet may further include a negative electrode binder. The negative electrode binder may include, but is not limited to, one or more of styrene-butadiene rubber (SBR), water-soluble unsaturated resin SR-1B, polyacrylic acid, polymethylacrylic acid, sodium polyacrylate, polyacrylamide (PAM), polyvinyl alcohol (PVA), sodium alginate (SA), carboxymethyl chitosan (CMCS), methyl vinyl silicone rubber, nitrile rubber (NBR), hydrogenated nitrile rubber (HNBR), thermoplastic styrene-butadiene rubber (SBS), isoprene rubber, butadiene rubber (BR), ethyl cellulose, fluororubber, and acrylate rubber.

In some examples, the negative electrode sheet may further include a negative electrode conductive agent, or may not include a negative electrode conductive agent.

Optionally, the negative electrode conductive agent may include, but is not limited to, one or more of conductive graphite (e.g., KS-6, or SFG-6), superconducting carbon, acetylene black, carbon black (e.g., SP), Ketjen black (e.g., ECP), carbon dots, carbon nanotubes, graphene, carbon nanofibers, and vapor-grown carbon fibers (VGCF).

In some examples, the negative electrode sheet may further include a solid-state electrolyte material, or may not include a solid-state electrolyte material. Optionally, the solid-state electrolyte material may include, but is not limited to, one or more of a sulfide solid-state electrolyte material, a halide solid-state electrolyte material, and an oxide solid-state electrolyte material.

For the type of the sulfide solid-state electrolyte material, reference may be made to the sulfide solid-state electrolyte material in the positive electrode sheet described above, and details are not repeated here.

Optionally, the halide solid-state electrolyte material may include one or more of Li₃YCl₆, Li₃YBr₆, Li₃ErCl₆, Li₃InCl₆, and Li₃InBr₆.

Optionally, the oxide solid-state electrolyte material may include one or more of a perovskite-structured oxide solid-state electrolyte material, a garnet-structured oxide solid-state electrolyte material, a NASICON-structured oxide solid-state electrolyte material, and a LISICON-structured oxide solid-state electrolyte material.

In some examples, the negative electrode sheet may be a metal sheet, for example, a lithium sheet or a lithium alloy sheet.

The negative electrode sheet may include a negative electrode current collector, or may not include a negative electrode current collector.

In some examples, the negative electrode sheet may include a negative electrode current collector and a lithium-based metal layer located on at least one surface of the negative electrode current collector. The negative electrode current collector has two opposite surfaces in a thickness direction thereof, and the lithium-based metal layer is disposed on either or both of the two opposite surfaces of the negative electrode current collector.

In some examples, the lithium-based metal layer may be lithium metal or a lithium alloy.

In some examples, the negative electrode sheet includes a negative electrode current collector and a negative electrode film layer located on at least one surface of the negative electrode current collector, and the negative electrode film layer includes a negative electrode active material. The negative electrode current collector has two opposite surfaces in a thickness direction thereof, and the negative electrode film layer is disposed on either or both of the two opposite surfaces of the negative electrode current collector.

In some examples, the negative electrode active material may include, but is not limited to, one or more of natural graphite, artificial graphite, mesocarbon microbeads, soft carbon, hard carbon, a silicon-based material, a tin-based material, lithium titanate, and a metal oxide.

In some examples, the negative electrode film layer further includes a negative electrode binder. The negative electrode binder may include, but is not limited to, one or more of styrene-butadiene rubber (SBR), water-soluble unsaturated resin SR-1B, polyacrylic acid, polymethylacrylic acid, sodium polyacrylate, polyacrylamide (PAM), polyvinyl alcohol (PVA), sodium alginate (SA), carboxymethyl chitosan (CMCS), methyl vinyl silicone rubber, nitrile rubber (NBR), hydrogenated nitrile rubber (HNBR), thermoplastic styrene-butadiene rubber (SBS), isoprene rubber, butadiene rubber (BR), ethyl cellulose, fluororubber, and acrylate rubber.

In some examples, the negative electrode film layer may further include a negative electrode conductive agent, or may not include a negative electrode conductive agent.

Optionally, the negative electrode conductive agent may include, but is not limited to, one or more of conductive graphite (e.g., KS-6, or SFG-6), superconducting carbon, acetylene black, carbon black (e.g., SP), Ketjen black (e.g., ECP), carbon dots, carbon nanotubes, graphene, carbon nanofibers, and vapor-grown carbon fibers (VGCF).

In some examples, the negative electrode film layer may further include a solid-state electrolyte material, or may not include a solid-state electrolyte material. Optionally, the solid-state electrolyte material may include, but is not limited to, one or more of a sulfide solid-state electrolyte material, a halide solid-state electrolyte material, and an oxide solid-state electrolyte material.

For the type of the sulfide solid-state electrolyte material, reference may be made to the sulfide solid-state electrolyte material in the positive electrode sheet described above, and details are not repeated here.

Optionally, the halide solid-state electrolyte material may include one or more of Li₃YCl₆, Li₃YBr₆, Li₃ErCl₆, Li₃InCl₆, and Li₃InBr₆.

Optionally, the oxide solid-state electrolyte material may include one or more of a perovskite-structured oxide solid-state electrolyte material, a garnet-structured oxide solid-state electrolyte material, a NASICON-structured oxide solid-state electrolyte material, and a LISICON-structured oxide solid-state electrolyte material.

In some examples, the negative electrode current collector may be a metal foil, a three-dimensional porous current collector, or a composite current collector. As an example of the metal foil, a copper foil, a copper alloy foil, a nickel foil, a nickel alloy foil, an aluminum foil, or an aluminum alloy foil may be used. As an example of the three-dimensional porous current collector, a copper mesh, a nickel mesh, an aluminum mesh, copper foam, nickel foam, or aluminum foam may be used. The composite current collector may include a polymer material substrate layer and a metal material layer formed on at least one surface of the polymer material substrate layer. As an example, the metal material may include, but is not limited to, one or more of copper, copper alloy, aluminum, aluminum alloy, nickel, nickel alloy, titanium, titanium alloy, silver, and silver alloy. As an example, the polymer material substrate layer may include, but is not limited to, one or more of polypropylene, polyethylene terephthalate (PET), polybutylene terephthalate (PBT), polystyrene, and polyethylene.

### [Solid-state electrolyte membrane]

The solid-state electrolyte membrane may be prepared by using a dry process, or may be prepared by using a wet process.

In some examples, the solid-state electrolyte membrane may include a solid-state electrolyte material. Optionally, the solid-state electrolyte material may include, but is not limited to, one or more of a sulfide solid-state electrolyte material, a halide solid-state electrolyte material, and an oxide solid-state electrolyte material.

For the type of the sulfide solid-state electrolyte material, reference may be made to the sulfide solid-state electrolyte material in the positive electrode sheet described above, and details are not repeated here.

Optionally, the halide solid-state electrolyte material may include one or more of Li₃YCl₆, Li₃YBr₆, Li₃ErCl₆, Li₃InCl₆, and Li₃InBr₆.

Optionally, the oxide solid-state electrolyte material may include one or more of a perovskite-structured oxide solid-state electrolyte material, a garnet-structured oxide solid-state electrolyte material, a NASICON-structured oxide solid-state electrolyte material, and a LISICON-structured oxide solid-state electrolyte material.

In some examples, the solid-state electrolyte membrane may further include a binder. Optionally, the binder may include, but is not limited to, one or more of polyvinylidene fluoride (PVDF), polytetrafluoroethylene (PTFE), a vinylidene fluoride-tetrafluoroethylenepropylene terpolymer, a vinylidene fluoride-hexafluoropropylene-tetrafluoroethylene terpolymer, a tetrafluoroethylene-hexafluoropropylene copolymer, fluorinated acrylate resin, water-soluble unsaturated resin SR-1B, methyl vinyl silicone rubber, nitrile rubber (NBR), hydrogenated nitrile rubber (HNBR), styrene-butadiene rubber (SBR), thermoplastic styrene-butadiene rubber (SBS), isoprene rubber, butadiene rubber (BR), ethyl cellulose, polyacrylic acid (PAA), sodium polyacrylate (PAAS), polyacrylamide (PAM), polyvinyl alcohol (PVA), sodium alginate (SA), polymethylacrylic acid (PMAA), carboxymethyl chitosan (CMCS), fluororubber, and acrylate rubber.

A preparation method for a solid-state battery cell is well-known. For example, an assembly manner of the solid-state battery cell includes, but is not limited to, a button battery, a mold battery, a hard-shell battery, or a pouch battery.

### Examples

The following examples provide a more specific description of the content disclosed in the present disclosure. These examples are only used for descriptive purposes, as various modifications and changes within the scope of the content disclosed in the present disclosure are apparent to those skilled in the art. Unless otherwise stated, all parts, percentages, and ratios reported in the following examples are based on mass, all reagents used in the examples are commercially available or synthesized according to conventional methods and can be directly used without further treatment, and all instruments used in the examples are commercially available.

### Example 1

### Preparation of positive electrode active material

LiNi_{0.8}Co_{0.1}Mn_{0.1}O₂ (NCM811 for short) powder and Co(OH)₂ powder were weighed according to a mass ratio of 99.5:0.5, and mixed uniformly by using a dry-process coater. The uniform mixture was heat-treated at 600°C in an oxygen atmosphere for 1 h to obtain an intermediate material. The intermediate material power and LiPO₂F₂ (LPF for short) powder were weighed according to a mass ratio of 99:1, and mixed uniformly by using a dry-process coater. The uniform mixture was heat-treated at 320°C in an oxygen atmosphere for 1 h to obtain the positive electrode active material. The positive electrode active material included a substrate material NCM811, a cobalt-rich material (that is, Co-doped cobalt-rich NCM811) located on a surface of the NCM811, and a coating material LiPO₂F₂ located on a surface of the cobalt-rich material. A thickness of the cobalt-rich material was in a range of 0.5 nm to 50 nm.

### Preparation of positive electrode sheet

The foregoing prepared positive electrode active material, a sulfide solid-state electrolyte material Li₆PS₅Cl, vapor-grown carbon fibers (VGCF) as a positive electrode conductive agent, and polytetrafluoroethylene (PTFE) as a positive electrode binder were mixed uniformly in a twin-planetary mixer according to a solid content mass ratio of 85:12:2:1. Then, the uniform mixture was heated, pressurized, and kneaded in an internal mixer to obtain a massive material, which was hot-rolled at 80°C to obtain a self-supporting electrode sheet. Finally, the electrode sheet and an aluminum foil as a positive electrode current collector were hot-rolled and laminated to obtain the positive electrode sheet. A thickness of the positive electrode sheet was 100 µm.

### Preparation of solid-state battery cell

100 mg of a sulfide solid-state electrolyte material Li₆PS₅Cl was weighed and added to a battery mold, and pressurized to obtain an electrolyte sheet. Then, the positive electrode sheet was placed on one side of the electrolyte sheet, an InLi alloy was added to the other side as a negative electrode. After pressing at 500 MPa for 5 min, the solid-state battery cell was assembled.

### Example 2

The preparation method for a solid-state battery cell was the same as that in Example 1 except the following differences.

### Preparation of positive electrode active material

LiNi_{0.8}Co_{0.1}Mn_{0.1}O₂ (NCM811 for short) powder and Co(OH)₂ powder were weighed according to a mass ratio of 98.5:1.5, and mixed uniformly by using a dry-process coater. The uniform mixture was heat-treated at 600°C in an oxygen atmosphere for 1 h to obtain an intermediate material. The intermediate material power and LiPO₂F₂ (LPF for short) powder were weighed according to a mass ratio of 99:1, and mixed uniformly by using a dry-process coater. The uniform mixture was heat-treated at 320°C in an oxygen atmosphere for 1 h to obtain the positive electrode active material. The positive electrode active material included a substrate material NCM811, a cobalt-rich material (that is, Co-doped cobalt-rich NCM811) located on a surface of the NCM811, and a coating material LiPO₂F₂ located on a surface of the cobalt-rich material. A thickness of the cobalt-rich material was in a range of 0.5 nm to 50 nm.

### Example 3

The preparation method for a solid-state battery cell was the same as that in Example 1 except the following differences.

### Preparation of positive electrode active material

LiNi_{0.8}Co_{0.1}Mn_{0.1}O₂ (NCM811 for short) powder and Co(OH)₂ powder were weighed according to a mass ratio of 97:3, and mixed uniformly by using a dry-process coater. The uniform mixture was heat-treated at 600°C in an oxygen atmosphere for 1 h to obtain an intermediate material. The intermediate material power and LiPO₂F₂ (LPF for short) powder were weighed according to a mass ratio of 99:1, and mixed uniformly by using a dry-process coater. The uniform mixture was heat-treated at 320°C in an oxygen atmosphere for 1 h to obtain the positive electrode active material. The positive electrode active material included a substrate material NCM811, a cobalt-rich material (that is, Co-doped cobalt-rich NCM811) located on a surface of the NCM811, and a coating material LiPO₂F₂ located on a surface of the cobalt-rich material. A thickness of the cobalt-rich material was in a range of 0.5 nm to 50 nm.

### Example 4

The preparation method for a solid-state battery cell was the same as that in Example 1 except the following differences.

### Preparation of positive electrode active material

LiNi_{0.8}Co_{0.1}Mn_{0.1}O₂ (NCM811 for short) powder and Co(OH)₂ powder were weighed according to a mass ratio of 99.5:0.5, and mixed uniformly by using a dry-process coater. The uniform mixture was heat-treated at 600°C in an oxygen atmosphere for 1 h to obtain an intermediate material. The intermediate material power and LiPO₂F₂ (LPF for short) powder were weighed according to a mass ratio of 97:3, and mixed uniformly by using a dry-process coater. The uniform mixture was heat-treated at 320°C in an oxygen atmosphere for 1 h to obtain the positive electrode active material. The positive electrode active material included a substrate material NCM811, a cobalt-rich material (that is, Co-doped cobalt-rich NCM811) located on a surface of the NCM811, and a coating material LiPO₂F₂ located on a surface of the cobalt-rich material. A thickness of the cobalt-rich material was in a range of 0.5 nm to 50 nm.

### Example 5

The preparation method for a solid-state battery cell was the same as that in Example 1 except the following differences.

### Preparation of positive electrode active material

LiNi_{0.8}Co_{0.1}Mn_{0.1}O₂ (NCM811 for short) powder and Co(OH)₂ powder were weighed according to a mass ratio of 99.5:0.5, and mixed uniformly by using a dry-process coater. The uniform mixture was heat-treated at 600°C in an oxygen atmosphere for 1 h to obtain an intermediate material. The intermediate material power and LiPO₂F₂ (LPF for short) powder were weighed according to a mass ratio of 99.9:0.1, and mixed uniformly by using a dry-process coater. The uniform mixture was heat-treated at 320°C in an oxygen atmosphere for 1 h to obtain the positive electrode active material. The positive electrode active material included a substrate material NCM811, a cobalt-rich material (that is, Co-doped cobalt-rich NCM811) located on a surface of the NCM811, and a coating material LiPO₂F₂ located on a surface of the cobalt-rich material. A thickness of the cobalt-rich material was in a range of 0.5 nm to 50 nm.

### Example 6

The preparation method for a solid-state battery cell was the same as that in Example 1 except the following differences.

### Preparation of positive electrode active material

LiNi_{0.8}Co_{0.1}Mn_{0.1}O₂ (NCM811 for short) powder and Co(OH)₂ powder were weighed according to a mass ratio of 99.5:0.5, and mixed uniformly by using a dry-process coater. The uniform mixture was heat-treated at 600°C in an oxygen atmosphere for 1 h to obtain an intermediate material. The intermediate material power and the lithium difluoro(oxalato)borate (LiDFOB for short) power are weighted according to a mass ratio of 99:1 mass ratio, and mixed uniformly by using a dry-process coater. The uniform mixture was heat-treated at 320°C in an oxygen atmosphere for 1 h to obtain the positive electrode active material. The positive electrode active material included a substrate material NCM811, a cobalt-rich material (that is, Co-doped cobalt-rich NCM811) located on a surface of the NCM811, and a coating material LiDFOB located on a surface of the cobalt-rich material. A thickness of the cobalt-rich material was in a range of 0.5 nm to 50 nm.

### Comparative Example 1

### Preparation of positive electrode sheet

The positive electrode active material LiNi_{0.8}Co_{0.1}Mn_{0.1}O₂ (NCM811 for short), a sulfide solid-state electrolyte material Li₆PS₅Cl, vapor-grown carbon fibers (VGCF) as a positive electrode conductive agent, and polytetrafluoroethylene (PTFE) as a positive electrode binder were mixed uniformly in a twin-planetary mixer according to a solid content mass ratio of 85:12:2:1. Then, the uniform mixture was heated, pressurized, and kneaded in an internal mixer to obtain a massive material, which was hot-rolled at 80°C to obtain a self-supporting electrode sheet. Finally, the electrode sheet and an aluminum foil as a positive electrode current collector were hot-rolled and laminated to obtain the positive electrode sheet. A thickness of the positive electrode sheet was 100 µm.

### [Preparation of solid-state battery cell]

100 mg of a sulfide solid-state electrolyte material Li₆PS₅Cl was weighed and added to a battery mold, and pressurized to obtain an electrolyte sheet. Then, the positive electrode sheet was placed on one side of the electrolyte sheet, an InLi alloy was added to the other side as a negative electrode. After pressing at 500 MPa for 5 min, the solid-state battery cell was assembled.

### Comparative Example 2

The preparation method for a solid-state battery cell was the same as that in Example 1 except the following differences.

### Preparation of positive electrode active material

LiNi_{0.8}Co_{0.1}Mn_{0.1}O₂ (NCM811 for short) powder and Co(OH)₂ powder were weighed according to a mass ratio of 99.5:0.5, and mixed uniformly by using a dry-process coater. The uniform mixture was heat-treated at 600°C in an oxygen atmosphere for 1 h to obtain the positive electrode active material.

### Comparative Example 3

The preparation method for a solid-state battery cell was the same as that in Example 1 except the following differences.

### Preparation of positive electrode active material

LiNi_{0.8}Co_{0.1}Mn_{0.1}O₂ (NCM811 for short) powder and Li₂ZrO₃ powder were weighed according to a mass ratio of 99.5:0.5, and mixed uniformly by using a dry-process coater. The uniform mixture was heat-treated at 400°C in an oxygen atmosphere for 1 h to obtain the positive electrode active material.

### Performance tests

### (1) First-cycle coulombic efficiency test

At 60°C, the solid-state battery cell was charged to 4.3 V (vs. Li⁺/Li) at a current density of 0.1 C, allowed to stand for 10 min, and then discharged to 2.8 V (vs. Li⁺/Li) at a current density of 0.1 C, to obtain a first-cycle charging specific capacity and a first-cycle discharging specific capacity. 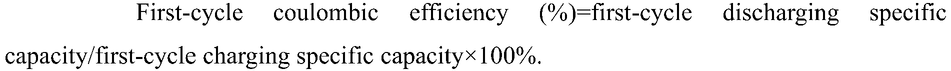 First-cycle coulombic efficiency (%)=first-cycle discharging specific capacity/first-cycle charging specific capacity×100%.

### (2) Cycle performance test

At 60°C, the solid-state battery cell was first charged to 4.3 V (vs. Li⁺/Li) at a current density of 0.1 C, allowed to stand for 10 min, and then discharged to 2.8 V (vs. Li⁺/Li) at a current density of 0.1 C. This charge-discharge cycle was repeated three times. Then, the solid-state battery cell was charged to 4.3 V (vs. Li⁺/Li) at a current density of 0.33 C, allowed to stand for 10 min, and then discharged to 2.8 V (vs. Li⁺/Li) at a current density of 0.33 C. A discharging specific capacity at this time was recorded as C1. The solid-state battery cell was cyclically charged and discharged at a current density of 0.33 C for 200 cycles. A discharging capacity at this time was recorded as C2.$Capacity retention rate of solid - state battery cell after 200 cycles = C 2 / C 1 \times 100 % .$

**Table 1**

| No. | 0.1 C first-cycle discharging specific capacity (mAh/g) | First-cycle coulombic efficiency (%) | 0.33 C discharging specific capacity C1 (mAh/g) | Capacity retention rate after 200 cycles at 60°C (%) |
|---|---|---|---|---|
| Example 1 | 210.4 | 92.5 | 200.2 | 94.6 |
| Example 2 | 208.6 | 92.7 | 198.3 | 95.1 |
| Example 3 | 206.6 | 93.1 | 196.5 | 95.5 |
| Example 4 | 207.5 | 93.5 | 196.8 | 96.2 |
| Example 5 | 212.6 | 91.3 | 201.5 | 92.8 |
| Example 6 | 211.5 | 92.4 | 201.4 | 94.5 |
| Comparative Example 1 | 190.2 | 83.5 | 176.8 | 20.3 |
| Comparative Example 2 | 200.5 | 86.4 | 188.5 | 35.4 |
| Comparative Example 3 | 206.4 | 89.7 | 194.2 | 38.7 |

It can be known from the foregoing test results that the positive electrode active material and the sulfide solid-state electrolyte material of the positive electrode sheet of the present disclosure have good high-temperature stability therebetween, which can reduce the capacity fade rate of the solid-state battery cell at high temperatures and improve the high-temperature cycle performance of the solid-state battery cell.

It should be noted that the present disclosure is not limited to the above embodiments. The foregoing embodiments are merely examples, and embodiments having substantially the same technical idea and the same effects within the scope of the technical solutions of the present disclosure are all included in the technical scope of the present disclosure. In addition, without departing from the scope of the subject matter of the present disclosure, various modifications to the embodiments that can be conceived by those skilled in the art and other modes constructed by combining some of the constituent elements of the embodiments are also included in the scope of the present disclosure.

## Claims

1. A positive electrode sheet, comprising a positive electrode active material and a sulfide solid-state electrolyte material, wherein the positive electrode active material comprises a substrate material, a cobalt-rich material located on a surface of the substrate material, and a coating material located on at least part of a surface of the cobalt-rich material; the substrate material comprises a transition metal oxide, the cobalt-rich material comprises a Co-containing transition metal oxide, and a molar content of Co in the cobalt-rich material is greater than a molar content of Co in the substrate material; and the coating material comprises an electrolyte salt material.

2. The positive electrode sheet according to claim 1, wherein the coating material comprises a fluorine-containing electrolyte salt material.

3. The positive electrode sheet according to any one of claims 1 to 2, wherein the coating material comprises one or more of Li₂PO₂F₂, lithium difluoro(oxalato)borate, lithium difluoro bis(oxalato)phosphate, and lithium tetrafluoro(oxalato)phosphate.

4. The positive electrode sheet according to any one of claims 1 to 3, wherein based on a total mass of the positive electrode active material as 100%, a mass fraction of the coating material is 0.1% to 3%.

5. The positive electrode sheet according to any one of claims 1 to 4, wherein the coating material is located on 90% to 100% of the surface of the cobalt-rich material.

6. The positive electrode sheet according to any one of claims 1 to 5, wherein a thickness of the cobalt-rich material is in a range of 0.5 nm to 50 nm.

7. The positive electrode sheet according to any one of claims 1 to 6, wherein
the substrate material comprises one or more of lithium nickel cobalt manganese oxide, lithium nickel cobalt aluminum oxide, and a lithium-rich manganese-based material; and/or
the cobalt-rich material comprises one or more of a cobalt-rich lithium nickel cobalt manganese oxide, a cobalt-rich lithium nickel cobalt aluminum oxide, and a cobalt-rich lithium-rich manganese-based material.

8. The positive electrode sheet according to any one of claims 1 to 7, wherein the substrate material comprises a Ni-containing transition metal oxide, the cobalt-rich material comprises a transition metal oxide containing Ni and Co, and a molar content of Ni in the cobalt-rich material is less than a molar content of Ni in the substrate material.

9. The positive electrode sheet according to any one of claims 1 to 8, wherein the cobalt-rich material is located on 100% of the surface of the substrate material; and/or there is no interface between the cobalt-rich material and the substrate material.

10. The positive electrode sheet according to any one of claims 1 to 9, wherein the positive electrode active material further comprises metal particles located between the cobalt-rich material and the coating material, and the metal particles comprise one or more of elemental cobalt particles and cobalt oxide particles.

11. The positive electrode sheet according to any one of claims 1 to 10, wherein
an average particle size of the positive electrode active material is 3 µm to 10 µm; and/or
an average particle size of the sulfide solid-state electrolyte material is 1 nm to 20 µm; and/or
a mass ratio of the positive electrode active material to the sulfide solid-state electrolyte material is 99:1 to 70:30.

12. The positive electrode sheet according to any one of claims 1 to 11, wherein the positive electrode sheet further comprises a positive electrode conductive agent and/or a positive electrode binder.

13. The positive electrode sheet according to any one of claims 1 to 12, wherein the positive electrode sheet further comprises a positive electrode current collector, and the positive electrode active material and the sulfide solid-state electrolyte material are located on at least one surface of the positive electrode current collector.

14. A solid-state battery cell, comprising a negative electrode sheet, a solid-state electrolyte membrane, and the positive electrode sheet according to any one of claims 1 to 13, the solid-state electrolyte membrane being located between the negative electrode sheet and the positive electrode sheet.

15. The solid-state battery cell according to claim 14, wherein
the negative electrode sheet comprises one or more of lithium, lithium alloy, natural graphite, artificial graphite, mesocarbon microbeads, soft carbon, hard carbon, a silicon-based material, a tin-based material, lithium titanate, and a metal oxide; and/or
the solid-state electrolyte membrane comprises one or more of a sulfide solid-state electrolyte material, a halide solid-state electrolyte material, and an oxide solid-state electrolyte material.

16. A battery apparatus, comprising a plurality of the solid-state battery cells according to any one of claims 14 to 15.

17. A power consuming apparatus, comprising the solid-state battery cell according to any one of claims 14 to 15 or the battery apparatus according to claim 16.

18. A positive electrode active material, comprising a substrate material, a cobalt-rich material located on a surface of the substrate material, and a coating material located on at least part of a surface of the cobalt-rich material; wherein the substrate material comprises a transition metal oxide, the cobalt-rich material comprises a Co-containing transition metal oxide, and a molar content of Co in the cobalt-rich material is greater than a molar content of Co in the substrate material; and the coating material comprises an electrolyte salt material.

19. A preparation method for a positive electrode active material, comprising the following steps:
providing a substrate material, a cobalt source material, and a coating material, the substrate material comprising a transition metal oxide, and the coating material comprising an electrolyte salt material;
mixing the substrate material and the cobalt source material, and performing first heating treatment in an oxygen-containing atmosphere to obtain an intermediate material; and
mixing the obtained intermediate material and the coating material, and performing second heating treatment in an oxygen-containing atmosphere to obtain the positive electrode active material, the positive electrode active material comprising the substrate material, a cobalt-rich material located on a surface of the substrate material, and the coating material located on at least a part of a surface of the cobalt-rich material, the substrate material comprising the transition metal oxide, the cobalt-rich material comprising a Co-containing transition metal oxide, a molar content of Co in the cobalt-rich material being greater than a molar content of Co in the substrate material, and the coating material comprising the electrolyte salt material.

20. The preparation method according to claim 19, wherein
a temperature of the first heating treatment is 500°C to 800°C; and/or
a time of the first heating treatment is 0.5 h to 10 h; and/or
a temperature of the second heating treatment is 300°C to 400°C; and/or
a time of the second heating treatment is 0.5 h to 5 h; and/or
the cobalt source material comprises one or two of cobalt hydroxide and cobalt oxide.
